# EUROPÄISCHE PATENTANMELDUNG

(11) **EP 4 467 321 A1**
(43) Veröffentlichungstag der Anmeldung: **27.11.2024**
(21) Anmeldenummer: 24167103.1
(22) Anmeldetag: 27.03.2024
(51) Int. Cl.: B29C 65/00, B65B 57/00, B29C 65/02, B29L 31/00

(54) **VERFAHREN UND SYSTEM ZUR ÜBERWACHUNG EINES FÜGEPROZESSES**

(30) Priorität: 26.05.2023 DE 102023113936; 12.06.2023 DE 202023103191 U
(71) Anmelder: Körber Pharma Packaging GmbH, 33758 Schloß Holte-Stuckenbrock (DE)
(72) Erfinder: KRAUSE, Martin, 33609 Bielefeld (DE); LEINEKE, Ulf, 33102 Paderborn (DE)
(74) Vertreter: Platzöder, Michael Christian

(57) **Zusammenfassung**

Ein Verfahren zur automatischen Überwachung eines Fügeprozesses zum Verbinden einer Mehrzahl von Substraten zu einem Verbundprodukt unter Druckbeaufschlagung durch eine Pressvorrichtung weist auf: Erfassen von Messdaten, die für verschiedene von der Pressvorrichtung im Rahmen der Druckbeaufschlagung eingenommene Arbeitsstellungen jeweilige Messwerte einer Messgröße repräsentieren, die eine während der jeweiligen Arbeitsstellung auf die Substrate einwirkende Presskraft oder eine in einem Abhängigkeitsverhältnis damit stehende Größe angibt; Auswerten der erfassten Messdaten, um daraus eine Mehrzahl verschiedener Merkmale zu extrahieren, die jeweils einzeln und/oder gemeinsam zumindest eine charakteristische Eigenschaft eines durch die Messdaten repräsentierten Verlaufs der Messgröße in Abhängigkeit von den Arbeitsstellungen der Pressvorrichtung oder einer zu den Arbeitsstellungen korrespondierenden Größe repräsentieren; Ermitteln eines Bewertungsindikators in Abhängigkeit von den extrahierten Merkmalen; Bewerten des Fügeprozesses anhand einer Gegenüberstellung des Bewertungsindikators mit einer Bewertungsreferenz unter Erzeugung eines aus der Gegenüberstellung resultierenden Bewertungsergebnisses, das eine Qualität des Fügeprozesses oder des damit erzeugten Verbundprodukts kennzeichnet; und Steuern der Pressvorrichtung und/oder Weiterbehandeln des mittels des Fügeprozesses erzeugten Verbundprodukts in Abhängigkeit von dem Bewertungsergebnis.

## Beschreibung

Die vorliegende Erfindung betrifft ein, insbesondere computer-implementiertes, Verfahren zur automatischen Überwachung eines Fügeprozesses zum Verbinden einer Mehrzahl von überlappend angeordneten, insbesondere gestapelten, Substraten untereinander zu einem Verbundprodukt unter Druckbeaufschlagung durch eine Pressvorrichtung. Bei dem Fügeprozess kann es sich speziell um einen Siegelprozess zur Herstellung von Verpackungen, etwa Blisterverpackungen, handeln. Dementsprechend kann die Pressvorrichtung insbesondere eine Siegelmaschine, etwa eine Plattensiegelmaschine sein. Die Erfindung betrifft weiterhin eine zur Ausführung des Verfahrens konfiguriertes Datenverarbeitungssystem und ein ebenfalls zur Ausführung des Verfahrens konfiguriertes Computerprogramm, sowie ein das Datenverarbeitungssystem aufweisendes System zum Ausführen und automatischen Überwachen eines Fügeprozesses.

Bei Fügeprozessen der eingangs genannten Art besteht die Gefahr, dass die Qualität der erhaltenen Verbundprodukte beeinträchtigt wird, wenn sich zwischen den im Rahmen des Fügeprozesses zu verbindenden Substraten an einer Stelle, an der die Substrate zu ihrer Verbindung in Berührungskontakt zu bringen sind, ein Fremdkörper oder ein zwischen den Substraten, z. B. zum Zwecke von dessen Verpackung, einzuschließendes Produkt befindet.

Ein solcher Fall kann insbesondere bei der Herstellung von Blisterverpackungen, beispielsweise für Nahrungsmittel oder Arznei- oder Kosmetikprodukte auftreten. Solche Blisterverpackungen weisen oftmals ein erstes Substrat auf, das als Folie mit darin als Ausbuchtungen ausgebildeten Höfen zur Aufnahme des zu verpackenden Guts, z. B. von einer Tablette je Hof, ausgebildet ist. Ein zweites, ebenfalls meist folienartiges, Substrat wird durch den Fügeprozess so auf das erste Substrat aufgebracht und unter Druckbeaufschlagung durch eine Pressvorrichtung verbunden, insbesondere formschlüssig oder stoffschlüssig, dass die beiden Substrate außerhalb der durch die Höfe beanspruchten Flächen verbunden sind, während das zu verpackende Gut in den Höfen liegt und allseitig durch die miteinander verbundenen Substrate umgeben ist. Ein solcher Fügeprozess wird oftmals auch als "Siegelprozess" und eine zu seiner Ausführung konfigurierte Vorrichtung als "Siegelmaschine" oder "Siegelvorrichtung" bezeichnet. Die oben genannte Qualitätsproblematik ergibt sich hier insbesondere dann, wenn das zu verpackende Produkt, etwa eine oder mehrere Tabletten, während der Druckbeaufschlagung nicht ordnungsgemäß nur in ihren jeweiligen Höfen liegen, sondern sich ganz oder teilweise auf zwischen den Höfen liegenden Substratflächen befinden.

Da das Auftreten derartiger Qualitätsprobleme regelmäßig nicht mit absoluter Sicherheit ausgeschlossen werden kann, werden die Fügeprozesse meist überwacht, um solche Probleme erkennen zu können.

Dazu ist es insbesondere bekannt, während der Druckbeaufschlagung der zu verbindenden Substrate im Rahmen des Fügeprozesses die dabei an der Pressvorrichtung auftretende Presskraft zu messen und diesbezüglich einen Schwellwertvergleich auszuführen. Liegt die Presskraft oberhalb einer vorbestimmten Schwelle, dann wird auf einen Fehler im Fügeprozess geschlossen, während andernfalls der Fügeprozess und das dabei hergestellte Verbindungsprodukt als fehlerfrei gewertet wird.

Es ist eine Aufgabe der Erfindung, die Überwachung von Fügeprozessen der eingangs genannten Art weiter zu verbessern.

Die Lösung dieser Aufgabe wird gemäß der Lehre der unabhängigen Ansprüche erreicht. Verschiedene Ausführungsformen und Weiterbildungen der Lösung sind Gegenstand der Unteransprüche.

Ein erster Aspekt der hier vorgestellten Lösung betrifft ein, insbesondere computer-implementiertes, Verfahren zur automatischen Überwachung eines Fügeprozesses zum Verbinden, insbesondere Laminieren, einer Mehrzahl von überlappend angeordneten Substraten untereinander zu einem Verbundprodukt unter Druckbeaufschlagung durch eine Pressvorrichtung, insbesondere einer Siegelmaschine, z. B. Plattensiegelmaschine. Das Verfahren weist auf:
(i) Erfassen, insbesondere Empfangen, Einlesen oder messtechnisch Erfassen, von Messdaten, die für verschiedene von der Pressvorrichtung im Rahmen der Druckbeaufschlagung eingenommene Arbeitsstellungen jeweilige Messwerte einer, insbesondere skalaren oder vektoriellen, Messgröße repräsentieren, die eine während der jeweiligen Arbeitsstellung auf die Substrate einwirkende Presskraft oder eine in einem Abhängigkeitsverhältnis damit stehende Größe angibt;
(i) Auswerten der erfassten Messdaten, um daraus eine Mehrzahl verschiedener Merkmale zu extrahieren, insbesondere zu berechnen, die jeweils einzeln und/oder gemeinsam zumindest eine charakteristische Eigenschaft eines durch die Messdaten repräsentierten Verlaufs der Messgröße in Abhängigkeit von den Arbeitsstellungen der Pressvorrichtung oder einer zu den Arbeitsstellungen korrespondierenden Größe repräsentieren;
(iii) Ermitteln eines als ein Maß für eine Qualität des Fügeprozesses definierten, insbesondere numerischen, Bewertungsindikators in Abhängigkeit von den extrahierten Merkmalen;
(iv) Bewerten des Fügeprozesses anhand einer Gegenüberstellung, etwa in Form eines Vergleichs, des ermittelten Bewertungsindikators mit einer definierten, insbesondere numerischen, Bewertungsreferenz unter Erzeugung eines aus der Gegenüberstellung resultierenden, insbesondere numerischen, Bewertungsergebnisses (als Maß einer Qualität des Fügeprozesses oder des damit erzeugten Verbundprodukts); und
(v) Steuern der Pressvorrichtung und/oder Weiterbehandeln, insbesondere Weiterprozessieren, Ausschleusen oder Markieren, des mittels des Fügeprozesses erzeugten Verbundprodukts in Abhängigkeit von dem Bewertungsergebnis.

Unter dem Begriff "Substrat", wie hierin verwendet, ist ein homogener oder heterogener, insbesondere folien- oder plattenförmiger Festkörper (d. h. mit festem Aggregatzustand bei Normaltemperatur 20 °C und Normaldruck 1013 hPa) zu verstehen, der geeignet ist, zusammen mit einem oder mehreren anderen solcher oder ähnlicher Festkörper unter Druckbeaufschlagung zu einem Verbundprodukt zusammengefügt zu werden. Insbesondere kann ein Substrat als Kunststoff oder Metallfolie oder bereits selbst als Verbundwerkstoff ausgebildet sein. Insbesondere fallen die verschiedenen Schichten einer Blisterverpackung jeweils unter den Begriff "Substrat", wie hierin verwendet.

Unter dem Begriff "charakteristisches Merkmal" oder kurz "Merkmal", wie hierin verwendet, ist eine Eigenschaft des Verlaufs der Messgröße zu verstehen, die grundsätzlich geeignet ist, Verläufe der Messgröße, die bei fehlerfreier Ausführung des Fügeprozesses auftreten, von anderen Verläufen der Messgröße zu unterscheiden, die bei fehlerbehafteter Ausführung des Fügeprozesses, auftreten. Solche fehlerbehafteten Ausführungen können insbesondere Fälle betreffen, bei denen die Qualität der erhaltenen Verbundprodukte dadurch beeinträchtigt wird, dass sich zwischen den im Rahmen des Fügeprozesses zu verbindenden Substraten an einer Stelle, an der die Substrate zu ihrer Verbindung in Berührungskontakt zu bringen sind, ein oder mehrere Fremdkörper oder zu verpackende Produkte befinden. Ein Merkmal kann zwar optional auch unmittelbar eine physikalische Bedeutung haben, es kann sich dabei jedoch auch nur um eine reine Rechengröße ohne unmittelbare Bedeutung handeln. Entscheidend ist jedoch, dass es allein oder über seinen Beitrag im Rahmen einer Kombination mit anderen Merkmalen dazu genutzt werden kann, eine während des Fügeprozesses auftretende Anomalie erkennbar zu machen.

Unter dem Begriff "Größe", wie hierin verwendet, ist eine physikalische oder chemische Größe, d. h. eine an einem Objekt der Physik oder Chemie quantitativ bestimmbare Eigenschaft eines Vorgangs oder Zustands zu verstehen. Insbesondere stellen sind Drücke, Kräfte, elektrische oder mechanische Spannungen, Stoffzusammensetzungen oder -strukturen, Massendichten, Längen usw. jeweils Größen in diesem Sinne.

Unter dem Begriff "Arbeitsstellung", wie hierin verwendet, ist ein jeweiliger Zustand der Pressvorrichtung zu verstehen, wobei verschiedene Arbeitsstellungen zu verschiedenen Arbeitspunkten, insbesondere Hüben oder Abständen von beim Pressen eine Presswirkung auf das Pressgut (vorliegend Substrate) auswirkenden Presswerkzeugen, der Pressvorrichtung korrespondieren.

Die hierein gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist etwa ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives "oder" und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier gegebenenfalls verwendet wird, ist im Sinne von "zwei oder mehr" zu verstehen.

Die Begriffe "erste/r/s", "zweite/r/s", "dritte/r/s" und ähnliche Begriffe in der Beschreibung und in den Ansprüchen werden zur Unterscheidung zwischen ähnlichen oder ansonsten gleich benannten Elementen und nicht unbedingt zur Beschreibung einer sequenziellen, räumlichen oder chronologischen Reihenfolge verwendet. Es versteht sich, dass die so verwendeten Begriffe unter geeigneten Umständen austauschbar sind und dass die hierin beschriebenen Ausführungsformen der Lösung auch in anderen als den hier beschriebenen oder dargestellten Reihenfolgen funktionieren können.

Unter dem Begriff "konfiguriert" oder "eingerichtet" eine bestimmte Funktion zu erfüllen, (und jeweiligen Abwandlungen davon), wie er hier gegebenenfalls verwendet wird, ist zu verstehen, dass eine diesbezügliche Vorrichtung oder Komponente davon bereits in einer Ausgestaltung oder Einstellung vorliegt, in der sie die Funktion ausführen kann oder sie zumindest so einstellbar - d. h. konfigurierbar - ist, dass sie nach entsprechender Einstellung die Funktion ausführen kann. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, sodass das Konfigurieren mittels einer Auswahl einer dieser Konfigurationen bzw. Betriebsmodi erfolgen kann.

Das Verfahren nach dem ersten Aspekt zeichnet sich insbesondere dadurch aus, dass eine Mehrzahl verschiedener charakteristischer Merkmale des Verlaufs der Messgröße zur Bewertung des Fügeprozesses herangezogen werden. Dies hat zum einen den Vorteil, dass nicht nur unmittelbar messbare Merkmale, sondern auch geeignete, nur mittelbar aus dem Verlauf ableitbare Merkmale für die Bewertung verwendet werden können, sodass sich die verfügbare Bewertungsgrundlage erweitern lässt.

So erlaubt die Verwendung einer Mehrzahl von Merkmalen anstelle eines einzelnen Merkmals als Bewertungsgrundlage eine Steigerung der erreichbaren Zuverlässigkeit (oder gleichbedeutend: ein Senken der Fehlerquote) und/oder der Genauigkeit der Bewertung. Somit lässt sich die Fertigung besser optimieren und unter Reduktion von irrtümlich als defekt eingestuften Verbundprodukten die Prozessausbeute des Fügeprozesses erhöhen. Insbesondere ist das Verfahren daher, anders als etwa eine bloße Messung einer Maximalkraft mit anschließendem einem Schwellwertvergleich nicht auf die Erkennung sehr großer Überlastsituationen beschränkt. Insbesondere ist das Verfahren auch weniger anfällig gegenüber etwaigen messungsverfälschenden thermischen Ausdehnungen von Bauteilen der Pressvorrichtung oder des Pressguts.

Nachfolgend werden nun zunächst verschiedene beispielhafte Ausführungsformen des Verfahrens beschrieben, die jeweils, soweit dies nicht ausdrücklich ausgeschlossen wird oder technisch unmöglich ist, beliebig miteinander sowie mit den im Weiteren beschriebenen anderen Aspekten der vorliegenden Lösung kombiniert werden können.

Bei einigen Ausführungsformen ist oder wird zumindest eines der Merkmale aus der folgenden Liste von Größen ausgewählt oder als eine mit zumindest einer Größe aus der Liste in einem Abhängigkeitsverhältnis stehende Größe definiert:
- ein zu einer maximalen Presskraft korrespondierender Extremwert, insbesondere lokales oder globales Maximum, des Verlaufs der Messgröße;
- ein Indikator, der eine Arbeitsstellung kennzeichnet, bei der der Extremwert auftrat;
- eine, insbesondere konstante, Vorspannungskraft, der die Anordnung der überlappenden Substrate durch die Pressvorrichtung ausgesetzt war, bevor die zum Verbinden der Substrate mit einer demgegenüber, insbesondere sprunghaft, erhöhten Presskraft ausgeführte Druckbeaufschlagung einsetzte;
- eine, insbesondere konstante, Nachspannungskraft, der die Anordnung der dann bereits verbundenen Substrate durch die Pressvorrichtung ausgesetzt wurde, nachdem die zum Verbinden der Substrate mit einem demgegenüber, insbesondere sprunghaft, erhöhten Presskraft ausgeführte Druckbeaufschlagung erfolgt war;
- eine Differenz oder ein Verhältnis aus Vorspannungskraft und Nachspannungskraft;
- ein Indikator, der eine Arbeitsstellung kennzeichnet, bei der ausgehend von der Vorspannungskraft die mit einer demgegenüber, insbesondere sprunghaft, erhöhten Presskraft ausgeführte Druckbeaufschlagung zum Verbinden der Substrate einsetzte oder ansteigend eine erste vorbestimmte Kraftschwelle überschritt;
- ein Indikator, der eine Arbeitsstellung kennzeichnet, bei der nach der mit einer demgegenüber, insbesondere sprunghaft, erhöhten Presskraft ausgeführten Druckbeaufschlagung zum Verbinden der Substrate die Nachspannungskraft einsetzte oder die vorausgehende Druckbeaufschlagung abfallend eine zweite vorbestimmte Kraftschwelle überschritt;
- eine über ihren Verlauf hinweg bestimmtes Integral der Messgröße.

Eine (erste) Größe steht hierbei "in einem Abhängigkeitsverhältnis" mit zumindest einer (zweiten) Größe aus der Liste, wenn sie auf vorbestimmte Weise, insbesondere im Sinne einer (insbesondere injektiven) mathematischen Funktion, aus der zumindest einen (zweiten) Größe aus der Liste bestimmt werden kann, von der sie abhängt. Insbesondere kann ein solches Abhängigkeitsverhältnis auch anhand eines mathematischen Differenzierens oder Integrierens definiert sein.

Die Vorspannung und/oder die Nachspannung können insbesondere mittels einer auf die Substrate bzw. das Verbundprodukt einwirkende Federkraft oder einem Gasdruck bewirkt werden, etwa um die noch unverbundenen Substrate gegen ein Verrutschen relativ zueinander zu sichern (im Falle der Vorspannung) oder in beiden Fällen ein Verrutschen der Substrate oder des daraus erzeugten Verbundprodukts relativ einer Auflage zu sichern. Die zum Bewirken der Vorspannung und/oder Nachspannung eingesetzten Mittel können sich insbesondere von den zur Druckbeaufschlagung genutzten Mitteln unterscheiden. Beispielsweise können die Vor- und/oder Nachspannung allein durch eine Federkraft bewirkt werden, während die Druckbeaufschlagung durch einen Druckkolben oder einen motorbetriebenen Aktuator bewirkt wird.

Die in der Liste genannten Merkmale (und ggf. die damit in einem Abhängigkeitsverhältnis stehenden Größen) haben sich als besonders geeignete Größen für ein Kennzeichnen von fehlerhaften Ausführungen gegenüber fehlerfreien Ausführungen des Fügeprozesses anhand einer Kombination von zwei oder mehr dieser Größen erwiesen.

Bei einigen Ausführungsformen werden als Messdaten Sensordaten erfasst, die auf Basis von Messungen mit zumindest einem der folgenden Sensortypen erfasst wurden oder werden: Wägezelle, Dehnungsmessstreifen, Beschleunigungsmesser. Diesen Sensortypen ist gemein, dass sie unmittelbar oder mittelbar eine Messung der durch die Pressvorrichtung in Abhängigkeit von ihrer jeweiligen Arbeitsstellung auf das Pressgut ausgeübten Presskraft ermöglichen.

Bei einigen Ausführungsformen werden die Messdaten einer Vorverarbeitung zur Verbesserung der Datenqualität unterzogen, und die Extraktion zumindest eines der Merkmale aus den im Rahmen der Vorverarbeitung aufbereiteten Messdaten erfolgt. Die Vorverarbeitung kann hierzu insbesondere ein Filtern der Messdaten zur Reduktion oder Beseitigung hochfrequenter Störeinflüsse umfassen. So lässt sich eine Qualität der nachfolgenden Merkmalsextraktion erhöhen und infolgedessen die Wahrscheinlichkeit von darauf beruhenden Fehlbewertungen reduzieren.

Bei einigen Ausführungsformen umfasst die Vorverarbeitung ein Transformieren der Messdaten derart, dass die transformierten Messdaten die Messgröße weiterhin als eine in Abhängigkeit von den Arbeitsstellungen der Pressvorrichtung oder der zu den Arbeitsstellungen korrespondierenden Größe repräsentieren, sie jedoch von der Geschwindigkeit der von der Pressvorrichtung ausgeübten Druckbeaufschlagung (d. h. von der mathematischen Ableitung des Pressdrucks oder der Presskraft nach der Zeit) unabhängig sind. Das Resultat der Vorverarbeitung stellt somit die Messdaten, etwa einen Kraftverlauf, mit Bezug auf eine geschwindigkeitsunabhängige Größe, etwa einer eine Arbeitsstellung kennzeichnen Position eines Presswerkzeugs der Pressvorrichtung dar. Dadurch spielt die Geschwindigkeit keine Rolle für die nachfolgende Ermittlung der Merkmale. Da sich kleine Geschwindigkeitsschwankungen oft nicht vermeiden lassen, dient die Transformation insbesondere dazu, das Verfahren noch robuster gegenüber Störungen oder gegenüber nicht oder nur schlecht kontrollierbaren Prozessschwankungen zu machen.

Bei einigen Ausführungsformen erfolgt das Ermitteln des Bewertungsindikators in Abhängigkeit von den extrahierten Merkmalen eine Gewichtung der Merkmale mit jeweiligen zugeordneten Gewichtswerten. Dies kann insbesondere unter Bildung einer gewichteten Summe erfolgen. Die Gewichtung der Merkmale kann hierbei insbesondere anhand jeweiliger, den Merkmalen individuell zugeordneter Gewichtsfaktoren definiert werden. Somit wird es möglich, die verschiedenen zur Überwachung des Fügeprozesses herangezogenen Merkmale unterschiedlich stark in die Bestimmung des Bewertungsindikators heranzuziehen. Wenn die Gewichte zudem variabel bestimmbar sind, lässt sich so der Bewertungsindikator, insbesondere auch iterativ, als eine sehr gute Approximation eines "idealen" Bewertungsindikators erreichen.

Bei einigen solcher Ausführungsformen werden die Merkmale jeweils anhand von zumindest eines jeweiligen Werts aus einer je Merkmal individuellen oder für alle Merkmale gleichen, vordefinierten, begrenzten Wertemenge quantifiziert und diese Werte fließen mit den jeweils zugeordneten Gewichtswerten in die Ermittlung des Bewertungsindikators ein. Beispielsweise kann die Wertemenge durch den numerischen Bereich [0; 1] gegeben sein. Eine derartige Normierung erleichtert die Implementierung und Effizienz des Verfahrens. Insbesondere lassen sich so gleiche oder nur gering voneinander abweichende Genauigkeiten bezüglich der Quantifizierung der einzelnen Merkmale realisieren.

Bei einigen Ausführungsformen wird zumindest einer der Gewichtswerte auf Basis von den jeweiligen Bewertungsergebnissen eines oder mehrerer vorausgehender Ausführungen des Fügeprozesses abgeleitet, wobei diese Bewertungsergebnisse jeweils einen fehlerhaften Fügeprozess anzeigen. Das Bestimmen der Gewichtswerte auf Basis fehlerhafter Prozessausführungen erlaubt eine besonders effektive und schnelle Konvergenz der Gewichtswerte hin zu einem jeweiligen idealen Wert. Dabei werden mehrere Prozessausführungen mit unterschiedlichen Fehlerursachen zugrunde gelegt, um später nach Festlegung der Gewichtswerte eine Vielzahl verschiedener Fehler korrekt erkennen zu können.

Bei einigen Ausführungsformen erfolgt das Ermitteln des Bewertungsindikators unter Verwendung eines trainierten Maschinenlern-Modells mit den extrahierten Merkmalen als Eingangsgrößen des Maschinenlern-Modells. Als Maschinenlern-Modell kommt hier insbesondere ein künstliches neuronales Netz (KNN) infrage, dessen Parameter (Gewichte seiner Neuronen) im Rahmen eines Trainings mit geeigneten Trainingsdaten optimiert werden. Die Trainingsdaten können insbesondere eine Vielzahl verschiedener Datensätze aufweisen, die jeweils eine mögliche Wertbelegung der als Eingangsgrößen dienen Merkmale sowie einen korrekten Wert für den ihr zuzuordnenden Bewertungsindikator aufweisen. Gegenüber einem einmalig festgelegten Gewichtungsschema hat die Verwendung eines Maschinenlern-Modells insbesondere den Vorteil, dass ein weiteres fortlaufendes Optimieren des Verfahrens auch nach dessen erstmaliger Inbetriebnahme verfügbar ist und auch sehr komplexe, anderweitig schwer ermittelbare Gewichtungsfunktionen sehr gut bestimmbar oder approximierbar sind.

Bei einigen Ausführungsformen umfasst die Gegenüberstellung des ermittelten Bewertungsindikators mit einer definierten Bewertungsreferenz einen Vergleich des ermittelten Bewertungsindikators mit zumindest einer als Bewertungsreferenz dienenden, vorbestimmten Bewertungsschwelle. Der Bewertungsindikator, bzw. die Vorschrift, z.B. Gewichtungsfunktion, zu seiner Bestimmung, kann insbesondere so definiert sein oder werden, dass die Wertemenge für den Bewertungsindikator einem bestimmten, insbesondere beidseitig, begrenzten Wertebereich (z.B. [0; 1]) entspricht, sodass die Bewertungsschwelle vereinfacht nur auf diesen Wertebereich bezogen bestimmt werden kann.

Bei einigen Ausführungsformen umfasst das Verfahren ein Überwachen einer mehrfachen, insbesondere sequenziellen oder parallelen, Ausführung des Fügeprozesses zur Erzeugung einer entsprechenden Anzahl von Verbundprodukten. Zudem erfolgt die Bewertung je überwachtem Fügeprozess. Hierbei wird je Fügeprozess das jeweilige Bewertungsergebnis in einer Datenstruktur, insbesondere in einem Schieberegister, oder Datenbank derart abgespeichert, dass darin die Bewertungsergebnisse den jeweiligen Fügeprozessen zugeordnet sind und aus den in der Datenstruktur bzw. Datenbank gespeicherten Inhalten auf die jeweiligen individuellen Bewertungsergebnisse jedes der Fügeprozesse rückgeschlossen werden kann. Somit kann das Verfahren auf eine Mehrzahl, insbesondere eine Vielzahl, von Prozessausführungen auf solcher Weise erweitert werden, dass die jeweiligen Bewertungsergebnisse, insbesondere mehrere zugleich, auch nach der jeweiligen Ausführung des Fügeprozesses zumindest temporär abrufbar bleiben. Insbesondere können im Falle einer Fertigungslinie die Bewertungsergebnisse auf diese Weise "mit den Verbundprodukten" entlang des weiteren Fertigungsprozesses "mitlaufen", sodass sie auch für etwaige im Prozessfluss stromabwärts der Pressvorrichtung angeordnete, Arbeitsstationen, z.B. eine Station zur Ausschleusung von Defektteilen, auswertbar bleiben.

Bei einigen Ausführungsformen erfolgt das Steuern der Pressvorrichtung je Fügeprozess in Abhängigkeit von dem jeweiligen zugeordneten und in der Datenstruktur bzw. Datenbank gespeicherten Bewertungsergebnis. Insbesondere ist es denkbar, dass der Pressvorgang gestoppt oder auf andere Art und Weise als im fehlerfreien Fall ausgeführt wird, wenn anhand des gespeicherten Bewertungsergebnisses ein Fehler bei der Prozessausführung festgestellt wird. Dies kann insbesondere genutzt werden, um etwaige vermeidbare Schäden oder Verschmutzungen an der Pressvorrichtung, etwa durch zerdrückte Fremdkörper oder zu verpackende Objekte, zu verhindern oder zu reduzieren.

Bei einigen Ausführungsformen werden die Bewertungsergebnisse unter Verwendung einer Kommunikation auf Basis des bekannten OPC Unified Architecture (OPC-UA) Informationsmodells, insbesondere gemäß dessen Version 2 (z.B. Version 2.0) an eine Steuerung der Pressvorrichtung übermittelt, um ihr das Steuern der Pressvorrichtung in Abhängigkeit von dem Bewertungsergebnis zu ermöglichen und/oder sie dazu zu veranlassen. Somit lassen sich die Bewertungsergebnisse auf standardisierte und somit herstellerunabhängige und zuverlässige Weise übermitteln.

Bei einigen Ausführungsformen wird als Pressvorrichtung eine Siegelmaschine, insbesondere eine Plattensiegelmaschine verwendet, um zwei oder mehr der Substrate zu einer Blisterverpackung zu verbinden. Eine solche Blisterverpackung kann insbesondere zur Verpackung von tablettenförmigen Arzneimitteln, Nahrungsergänzungsmitteln oder Kosmetikprodukten konfiguriert sein. Gerade bei Blisterverpackungen besteht grundsätzlich die Gefahr, dass die zu verpackenden Objekte (z.B. Tabletten) außerhalb der zu ihrer Aufnahme vorgesehen Höfe zu liegen kommen und daher den Fügeprozess stören und zu Defekten des entstehenden Verbundproduktes führen. Außerdem sind bei solchen Produkten die Anforderungen an eine Unversehrtheit der Produkte und ihrer Verpackung regelmäßig besonders hoch, sodass hier eine hochwertige Überwachung ihrer Fertigung und Verpackung besonders relevant ist.

Ein zweiter Aspekt der vorliegenden Lösung betrifft ein Datenverarbeitungssystem zur automatischen Überwachung eines Fügeprozesses, wobei das Datenverarbeitungssystem zumindest eine Prozessorplattform (mit zumindest einem Prozessor) und einen damit gekoppelten Speicher aufweist, in dem Anweisungen gespeichert sind, die bei ihrer Ausführung auf der Prozessorplattform diese veranlassen, das Verfahren nach dem ersten Aspekt, insbesondere gemäß einer oder mehrerer seiner hierin beschriebenen Ausführungsformen, auszuführen.

Ein dritter Aspekt der vorliegenden Lösung betrifft System zum Ausführen und automatischen Überwachen eines Fügeprozesses zum Verbinden einer Mehrzahl von überlappend angeordneten Substraten untereinander zu einem Verbundprodukt unter Druckbeaufschlagung durch eine Pressvorrichtung, insbesondere Plattensiegelmaschine, wobei das System die Pressvorrichtung einschließlich einer Steuerung dafür sowie das Datenverarbeitungssystem gemäß dem zweiten Aspekt aufweist, welches eingerichtet ist, von ihm verfahrensgemäß (d.h. gemäß dem Verfahren nach dem ersten Aspekt) bestimmte Bewertungsergebnisse für den Fügeprozess an die Steuerung zu kommunizieren. Das Datenverarbeitungssystem und die Steuerung können insbesondere auch zusammenfallen, sodass dann das Datenverarbeitungssystem zugleich konfiguriert ist, die Funktionen der Steuerung zu übernehmen.

Ein vierter Aspekt der vorliegenden Lösung betrifft ein Computerprogramm oder Computerprogrammprodukt, insbesondere ein nicht-flüchtiges computerlesbares Speichermedium, jeweils mit Anweisungen, die bei ihrer Ausführung auf einem Datenverarbeitungssystem nach dem zweiten Aspekt, bewirken, welches dieses das Verfahren nach dem ersten Aspekt ausführt.

Das Computerprogramm (bzw. die Anweisungen) kann (bzw. können) insbesondere auf einem nichtflüchtigen Datenträger gespeichert sein. Bevorzugt ist dies ein Datenträger des Systems nach dem dritten Aspekt, etwa ein Datenträger in Form eines optischen oder magnetischen Datenträgers oder eines Flashspeichermoduls oder eines sonstigen nichtflüchtigen Halbleiterspeichers. In einer anderen Implementierung kann das Computerprogramm als eine Datei auf einer systemexternen Datenverarbeitungseinheit, insbesondere auf einem Server vorliegen, und über eine Datenverbindung, etwa das Internet oder eine dedizierte Datenverbindung, wie etwa ein proprietäres oder lokales Netzwerk, auf das Datenverarbeitungssystem nach dem zweiten Aspekt herunterladbar sein. Zudem kann das Computerprogramm eine Mehrzahl von zusammenwirkenden einzelnen Programmmodulen aufweisen. Die Module können insbesondere dazu konfiguriert sein oder jedenfalls so einsetzbar sein, dass sie im Sinne von verteiltem Rechnen (engl. "Distributed computing" auf verschiedenen Geräten (Computern bzw. Prozessoreinheiten ausgeführt werden, die geografisch voneinander beabstandet und über ein Datennetzwerk miteinander verbunden sind.

Die in Bezug auf den ersten Aspekt der Lösung erläuterten Merkmale und Vorteile gelten entsprechend auch für die weiteren Aspekte der Lösung.

Das Verfahren nach dem ersten Aspekt ist bevorzugt zur Ausführung mittels des lösungsgemäßen Datenverarbeitungssystem nach dem zweiten Aspekt ausgebildet, insbesondere einer hierin beschriebenen Ausführungsform davon. Das Datenverarbeitungssystem wiederum ist bevorzugt zur Durchführung des Verfahrens nach dem ersten Aspekt ausgebildet, insbesondere einer hierin beschriebenen Ausführungsform davon.

Weitere Vorteile, Merkmale und Anwendungsmöglichkeiten der vorliegenden Lösung ergeben sich aus der nachfolgenden detaillierten Beschreibung im Kontext der Figuren.

Dabei zeigt:
**Fig. 1** ein Flussdiagramm zur Veranschaulichung einer beispielhaften Ausführungsform des Verfahrens zur automatischen Überwachung eines Fügeprozesses.
**Fig. 2A** einen beispielhaften zeitlichen Verlauf einer erfassten Messgröße;
**Fig. 2B** einen beispielhaften zeitlichen Verlauf einer Positionskoordinate, deren Werte zu verschiedenen Arbeitsstellungen einer verfahrensgemäß verwendeten Pressvorrichtung korrespondieren;
**Fig. 2C** schematisch ein Vorverarbeiten der Messgröße aus Fig. 2A und die Kombination von ihrem Verlauf mit dem Verlauf der Positionskoordinate aus Fig. 2B, um einen Verlauf der vorverarbeiteten Messgröße in Abhängigkeit von der Positionskoordinate zu erhalten;
**Fig. 3A** ein Schema zur Illustration einer Extraktion verschiedener Merkmale aus dem Verlauf der Messgröße, insbesondere gemäß Fig. 2C;
Fig. 3B-D verschiedene Diagramme zur Illustration der Merkmalsextraktion für drei verschiedene beispielhaft ausgewählte Merkmale;
**Fig. 4A** ein Flussdiagramm zur Illustration eines Prozesses zur Bestimmung einer einem jeweiligen Merkmal zugeordneten quantifizierten Bewertung, hier am Beispiel des Merkmals "Maximalkraft";
**Fig. 4B** ein numerisches Beispiel für den Prozess aus Fig. 4A;
**Fig. 5A** ein Flussdiagramm zur Illustration eines Prozesses zur Bestimmung eines Bewertungsindikators für den Fügeprozess mittels einer gewichteten Summe der jeweiligen Bewertungen der einzelnen Merkmale;
**Fig. 5B** ein numerisches Beispiel für den Prozess aus Fig. 5A; und
**Fig. 6** schematisch eine beispielhafte Ausführungsform eines zur Durchführung des Verfahrens aus den vorausgehenden Figuren eingerichteten Systems zur automatischen Überwachung eines Fügeprozesses.

In den Figuren bezeichnen gleiche Bezugszeichen gleiche, ähnliche oder einander entsprechende Elemente. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich werden. In den Figuren dargestellte Verbindungen und Kopplungen zwischen funktionellen Einheiten und Elementen können, soweit nicht ausdrücklich anders angegeben, auch als indirekte Verbindung oder Kopplung implementiert werden. Soweit nicht im Einzelnen anders angegeben oder technisch nur auf bestimmte Weise möglich, können funktionale Einheiten insbesondere wahlweise als Hardware, Software oder eine Kombination aus Hardware und Software implementiert werden.

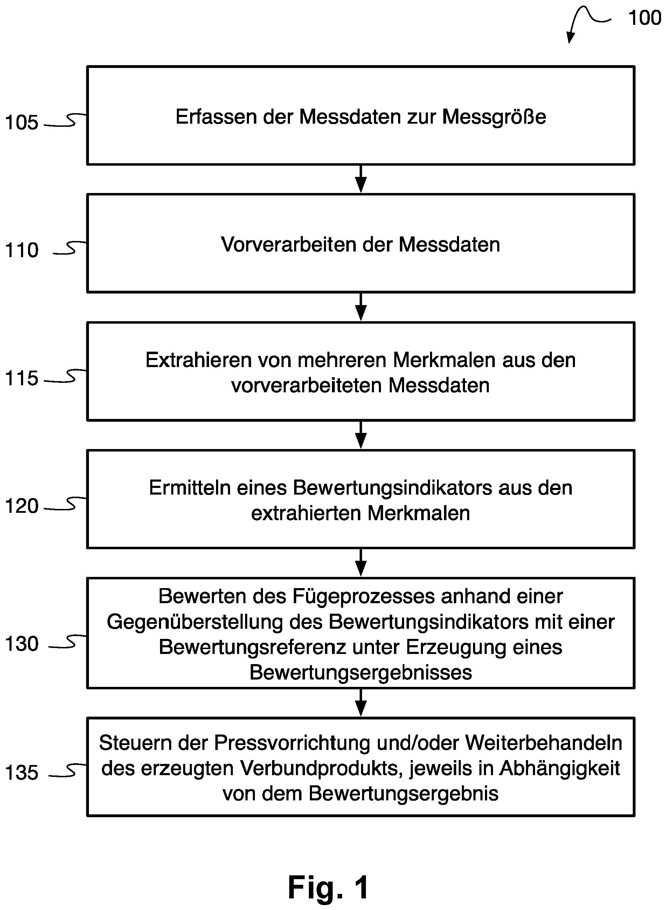

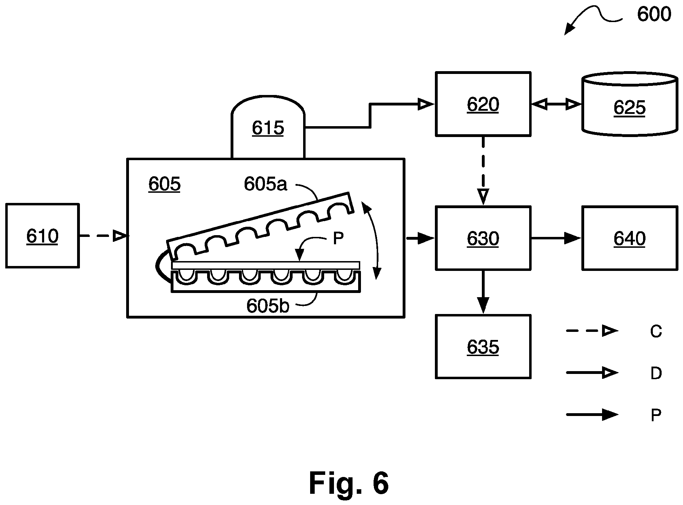

**In** **Fig. 1** ist eine beispielhafte Ausführungsform 100 des Verfahrens zur automatischen Überwachung eines Fügeprozesses als Flussdiagramm dargestellt. Das Verfahren 100 kann insbesondere durch das in **Fig. 6** illustrierte System 600 ausgeführt werden. Daher wird im Folgenden das Verfahren 100 unter beispielhafter Bezugnahme auf das System 600 erläutert, welches daher zunächst beschrieben wird.

Das System 600 weist eine Pressvorrichtung 605 zur Ausführung eines Fügeprozesses auf, bei dem zwei oder mehr Substrate, z.B. Kunststoff- oder Metallfolien, unter Druckbeaufschlagung mittels einer Presskraft zusammengepresst werden, um die Substrate dabei stoffschlüssig oder formschlüssig zu einem Verbundprodukt P zu verbinden. Bei der Pressvorrichtung 605 kann es sich insbesondere, wie in Fig. 6 illustriert, um eine Siegelmaschine, hier konkret um eine Plattensiegelmaschine, zur Herstellung von Blisterverpackungen handeln. Solche Blisterverpackungen können etwa zur Verpackung von Arzneimittelprodukten, insbesondere Tabletten, verwendet werden. Eine solche Plattensiegelmaschine kann insbesondere, wie gezeigt, zwei Presswerkzeuge 105a und 105b aufweisen, zwischen die die zu verbindenden Substrate überlappend, insbesondere aufeinandergestapelt, eingebracht werden, um sodann zwischen den Presswerkzeugen 105a,b mit Druck bzw. der Presskraft beaufschlagt zu werden.

Die Pressvorrichtung 605 weist zu ihrer Steuerung mittels geeigneter Steuersignale C eine Steuerungseinheit 610 auf, die insbesondere mittels einer speicherprogrammierbaren Steuerung (SPS) ausgeführt sein.

Des Weiteren weist das System 600 eine Sensorik 615 zur Erfassung von Messdaten auf, die für verschiedene von der Pressvorrichtung 605 im Rahmen der Druckbeaufschlagung eingenommene Arbeitsstellungen jeweilige Messwerte einer Messgröße repräsentieren, die eine während der jeweiligen Arbeitsstellung von den Presswerkzeugen 605a, b auf die Substrate ausgeübte Presskraft oder eine in einem Abhängigkeitsverhältnis damit stehende Größe, wie etwa einen Pressdruck oder eine zur Presskraft korrespondierenden Beschleunigung angibt. Als Sensortypen kommen hierzu insbesondere Wägezellen, Dehnungsmessstreifen und Beschleunigungsmesser infrage.

Das System 600 weist zudem ein Datenverarbeitungssystem 620, etwa einen Computer mit einem Speicher 625 auf. Die weiteren in Fig. 6 dargestellten Komponenten des Systems 600 werden im Weiteren bei der Erläuterung des Verfahrens 100 eingeführt.

Nun wird zur Erläuterung des Verfahrens 100 zusätzlich auf Fig. 1 Bezug genommen. Das Verfahren 100 kann insbesondere als computer-implementiertes Verfahren ausgestaltet und mittels eines auf dem Datenverarbeitungssystem ablauffähigen und beispielsweise in dem Speicher 625 abgelegten Computerprogramm implementiert sein.

Im Rahmen des Verfahrens 100 werden zunächst in einem Prozess 105 die Messdaten für die zumindest eine Messgröße erfasst, wozu die Messdaten von der Sensorik 615 empfangen werden.

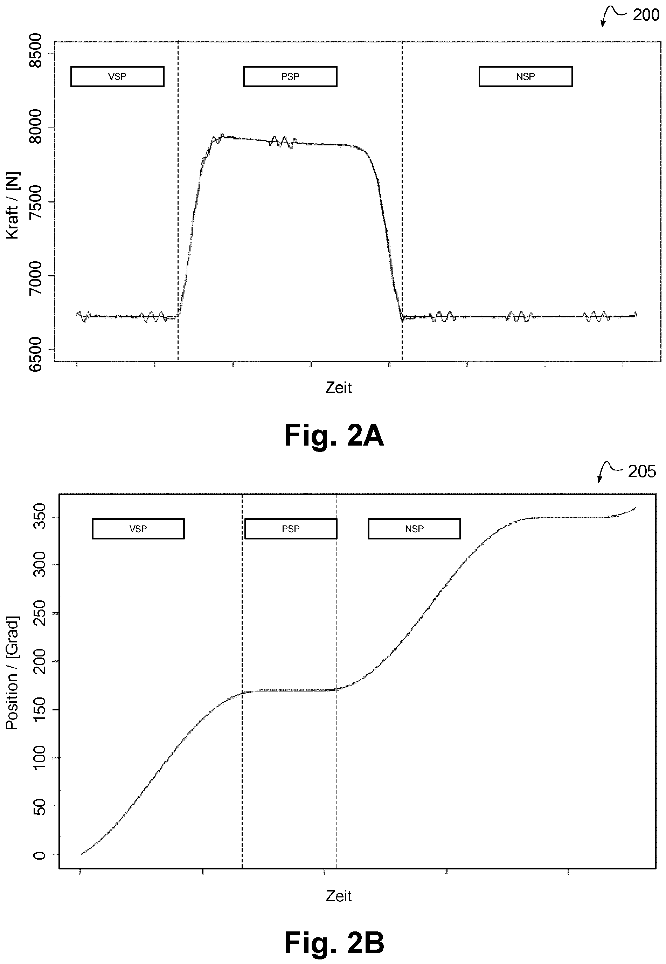

Ein Beispiel für einen durch erfasste Messdaten repräsentierten zeitlichen Verlauf 200 der Messgröße "Presskraft" ist in **Fig. 2A** illustriert. Der zeitliche Verlauf deckt dabei einen Pressvorgang ab, bei dem die zu verbindenden Substrate zunächst gegeneinander vorgespannt werden ("Vorspannung", VSP), dann mit erhöhter Presskraft (Pressspannung, PSP) miteinander verbunden werden und schließlich wieder bei demgegenüber geringerer Presskraft gegeneinander gespannt bleiben ("Nachspannung", NSP). Die Vorspannung kann insbesondere (allein) mittels einer Federkraft bei einem ersten, noch nicht zur Verbindung der Substrate ausreichenden Presskraftniveau erfolgen, wobei die dann noch nicht verbundenen, überlappenden Substrate zwischen den Werkzeugen 605a, b eingeklemmt werden, um sie gegen ein Verrutschen zu sichern, etwaige Lufteinschlüsse zwischen zu verbindenden Flächenabschnitten zu beseitigen, und/oder unerwünschte Verformungen der Substrate zu beseitigen. Die Verbindung unter Druckbeaufschlagung mit einer höheren Presskraft kann mit einem dafür vorgesehenen Pressmechanismus erfolgen, z.B. hydraulisch oder unter Verwendung eines Motors zur Erzeugung der Presskraft. Die Nachspannung kann wie die Vorspannung insbesondere wieder allein oder zumindest maßgeblich durch eine Federkraft erbracht werden, wenngleich andere Ausführungen ebenfalls denkbar sind.

Die erfassten Messdaten repräsentieren zudem einen beispielhaft in **Fig. 2B** illustrierten zeitlichen Verlauf 205 der Arbeitsstellung der Pressvorrichtung, insbesondere die relative Stellung der Werkzeuge 605a und 605b zueinander. Dabei kann zweckmäßig der Bereich der im Rahmen der Ausführung des Fügeprozesses nacheinander eingenommenen Arbeitsstellungen normiert werden, etwa wie im vorliegenden Beispiel auf einen Gradbereich [0°; 360°] für eine vollständige Prozessausführung, die insbesondere periodisch wiederholbar sein kann. Der Begriff "Position" wird nachfolgend verwendet, um die jeweilige Arbeitsstellung in Bezug auf diesen Gradbereich anzugeben. Selbstverständlich sind jedoch auch andere Arten, der Quantifizierung verschiedener Arbeitsstellungen stattdessen möglich.

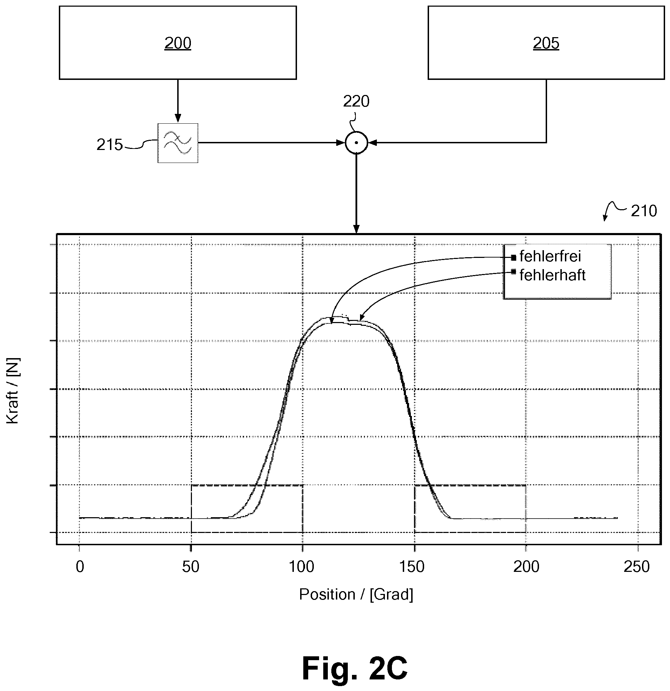

Die erfassten Messdaten werden nach ihrer Erfassung im Prozess 105 in einem weiteren Prozess 110 vorverarbeitet, insbesondere wie in **Fig. 2C** illustriert. Die Vorverarbeitung kann insbesondere ein Filtern 215 (insbesondere Tiefpassfiltern) des durch die Messdaten repräsentierten zeitlichen Verlaufs 200 der Messgröße(n) umfassen, um etwaige Störungen (insbesondere hochfrequente Störungen, wie in Fig. 2A erkennbar) darin zu entfernen oder jedenfalls zu reduzieren.

Bei der Vorverarbeitung werden der (gegebenenfalls gefilterte) Verlauf 200 und der Verlauf 205 zudem im Rahmen einer Transformation 220 (typischerweise rechnerisch) verknüpft, um einen Verlauf der Messgröße(n) in Abhängigkeit von der Arbeitsstellung (Position) zu erhalten. Im beispielhaften Diagramm 210 aus Fig. 2C sind bereits zwei verschiedene Verläufe der Messgröße als Funktion der Position dargestellt, wobei die Kurve mit niedrigerem Maximum zu einer fehlerfreien Prozessausführung korrespondiert, während die andere Kurve zu einer fehlerbehafteten Prozessausführung korrespondiert.

Man stelle sich hierzu insbesondere den Fall einer Blisterverpackung vor, bei deren Produktion zwei Substrate so zusammen zufügen sind, dass zu verpackende Tabletten idealerweise stets nur in einem der Substrate ausgebildeten Höfen lagern. Der fehlerfreie Verlauf im Diagramm 210 kennzeichnet hierzu den Fügeprozess. Zunächst liegt nur die im Wesentlichen konstante Vorspannung an, bevor dann bei einer Position bei etwa 80° die Kraft deutlich ansteigt und in einem Maximum mündet. Hier werden also die beiden Presswerkzeuge 605a, b maximal zusammengepresst, um die Substrate zu verbinden, während die Tabletten in den Höfen liegend der Presskraft nicht unterworfen sind. Beim anschließenden Druckabbau tritt eine Stufe im Kraftverlauf auf, bevor die Kraft dann kontinuierlich bis auf die Nachspannung abfällt.

Im Fehlerfall kommt dagegen zumindest eine der Tabletten zumindest teilweise außerhalb ihres zugeordneten Hofes zu liegen, sodass hier beim Zusammenfahren der Presswerkzeuge 605a, b früher (etwa bei 70°) als beim fehlerfreien Prozess ein Anstieg der auf die Substrate einwirkenden Presskraft zu verzeichnen ist, weil hier die genannte(n) Tablette(n) als Widerstand auftreten. Auch die Maximalkraft ist entsprechen höher als beim fehlerfreien Verlauf und selbst die Nachspannung kann später einsetzen. Auch die Fläche bzw. das Integral unter den Kurvenverläufen unterscheidet sich daher. Diese und ggf. anderer Unterschiede der Verläufe können im Folgenden genutzt werden, um eine Qualitätsbewertung des Fügeprozesses zu bewerkstelligen.

Ein Vorteil der Darstellung gemäß Diagramm 210 besteht darin, dass hier der Verlauf der Messgröße unabhängig von einer Geschwindigkeit des Prozessdurchlaufs verfügbar ist, sodass es insbesondere auf Geschwindigkeitsschwankungen im weiteren Verfahrensverlauf nicht ankommt. Die Analyse der Kurvenverläufe kann somit geschwindigkeitsunabhängig durchgeführt werden.

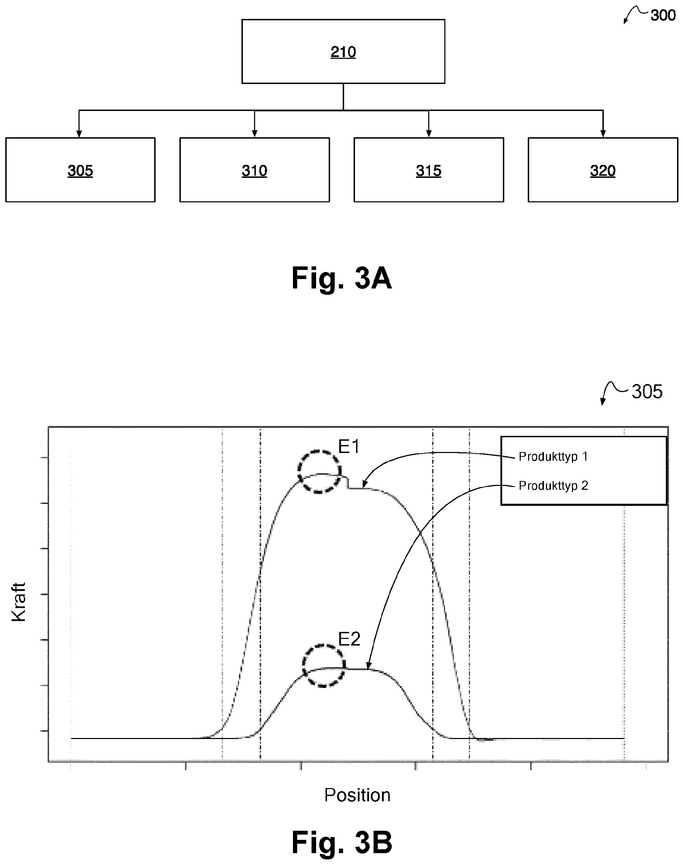

Im Rahmen des Verfahrens 100 folgt ein weiterer Prozess 115, bei dem aus den vorverarbeiteten Messdaten (vgl. Fig. 2C) verschiedene für den Verlauf 210 charakteristische Merkmale extrahiert werden. Dies ist in **Fig. 3A** illustriert, wo beispielhaft ein Schema 300 zur Extraktion von vier verschiedenen Merkmalen in jeweiligen Extraktionsprozessen 305 bis 320 dargestellt ist.

**Fig. 3B** illustriert den Extraktionsprozess 305 genauer, bei dem ein erstes Merkmal "Maximalkraft" extrahiert wird, welches die im Verlauf der Messung maximal auftretende Presskraft charakterisiert. In Fig. 3B ist hier für zwei verschiedene Produkttypen jeweils ein der Art nach zu Fig. 2C korrespondierender Verlauf der Presskraft dargestellt, einschließlich der Lage der jeweiligen, während der der Vorspannung folgenden Pressphase auftretenden Maxima (Extremwerte) E1 bzw. E2. Ihre Lage kann bei Bedarf auf bekannte Weise, insbesondere unter Verwendung von Differenzialrechnung, berechnet und werden. Die Maxima stellen die gesuchten Werte für das erste Merkmal dar.

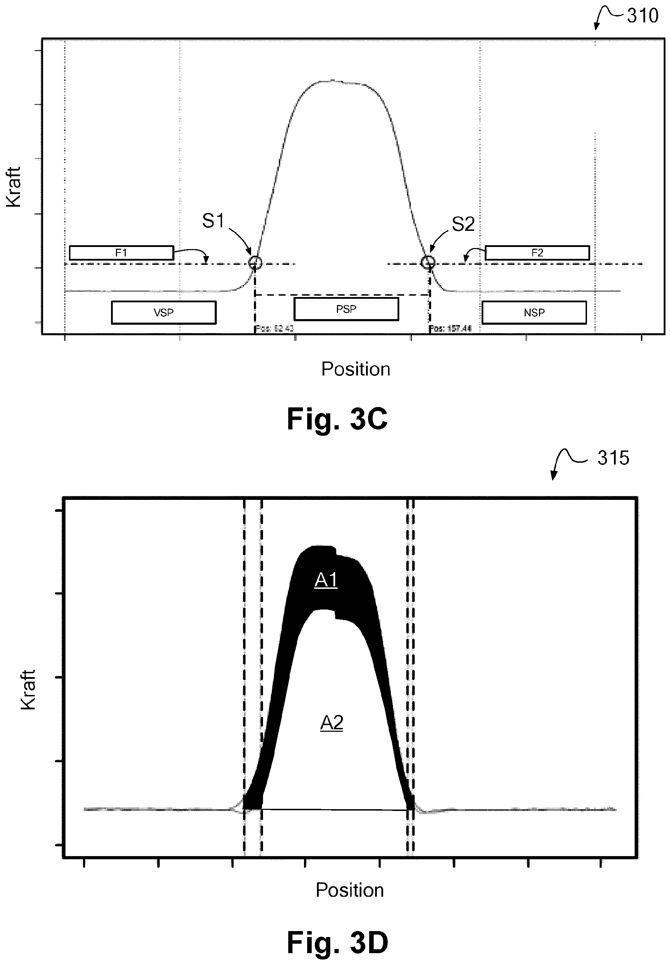

**Fig. 3C** illustriert die Extraktionsprozesse 310 und 315 genauer, bei denen das zweite Merkmal "Schwellenüberschreitung im Anstieg" und das dritte Merkmal "Schwellenüberschreitung im Abfall" extrahiert werden. Es handelt sich dabei um die Positionen S1 bzw. S2, bei denen der Kraftverlauf ausgehend von der Vorspannung im Anstieg eine definierte Anstiegskraftschwelle F1 überschreitet (zweites Merkmal) bzw. vor dem Erreichen der Nachspannung im Abfall eine definierte AbfallkraftschwelleF2 überschreitet. Auch der Abstand dieser beiden so bestimmten Positionen ist als Merkmal geeignet.

**Fig. 3D** illustriert den Extraktionsprozess 320 genauer, bei dem ein viertes Merkmal "Flächenintegral" extrahiert wird, welches ein Integral unter dem Verlauf der Presskraft charakterisiert, wobei (wie dargestellt) die Positionsbereiche der Vorspannung VSP und der Nachspannung NSP unberücksichtigt bleiben können, um eine höhere Sensitivität des Merkmals zu erreichen. In Fig. 3D ist dies beispielhaft für zwei verschiedene Verläufe illustriert, wobei die Integrale A1 bzw. A2 als Flächen unter den Verlaufskurven bestimmt werden (die Fläche A1 enthält in diesem Beispiel auch die Fläche A2 als Teilfläche). Dies kann insbesondere auf bekannte Weise durch Methoden der numerischen Integration erfolgen.

Wieder auf **Fig. 1** Bezug nehmend, folgt im Verfahren 100 ein weiterer Prozess 120, bei dem in mehreren Stufen aus den extrahierten Merkmalen ein Bewertungsindikator für die Qualität des Fügeprozesses bestimmt wird.

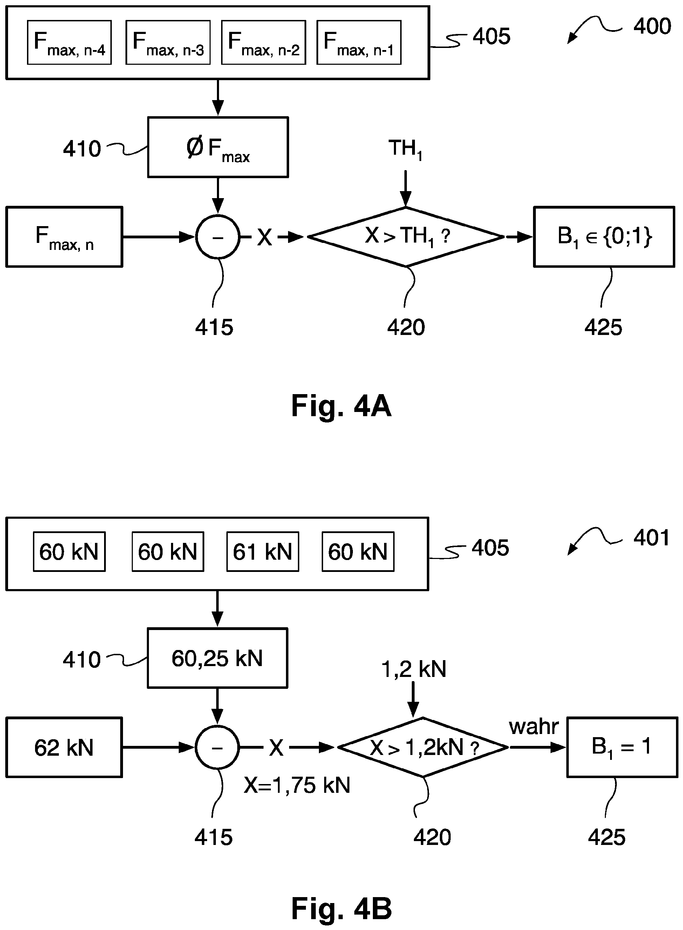

Eine erste Stufe dieses Prozesses 120 ist in **Fig. 4A** und als dazu passendes konkretes numerisches Beispiel 401 in **Fig. 4B** illustriert. Bei dieser ersten Stufe geht es darum, im Rahmen eines Prozesses 400 für ein jeweiliges der extrahierten Merkmale eine individuelle Bewertung vorzunehmen. In den Figuren 4A und 4B erfolgt dies zwar beispielhaft für das erste Merkmal "Maximalkraft" (Fₘₐₓ), dieselbe Methodik kann jedoch entsprechend auf für die anderen Merkmale übernommen werden.

Dazu wird von einer wiederholten, insbesondere getakteten, Ausführung des Fügeprozesses ausgegangen, wie sie insbesondere bei der Herstellung von Blisterverpackungen üblich ist. Zunächst wird hierbei in einem aktuellen Takt n aus mehreren, im konkreten Beispiel vier, Messwerten 405 der unmittelbar vorausgegangenen Takte n-4 bis n-1, also den einzelnen Messwerten F_{max,n-4} bis F_{max,n-1}, im Schritt 410 ein Mittelwert ØFₘₐₓ berechnet. In einem weiteren Schritt 415 wird eine Abweichung (hier konkret eine Differenz) X zwischen diesem Mittelwert ØFₘₐₓ und einem aus den Messdaten entnommenen Messwert F_{max,n} zum aktuellen Takt bestimmt. Diese Abweichung X wird sodann in einem Schritt 420 mit einer für das erste Merkmal definierten Bewertungsschwelle TH, verglichen. Liegt die Abweichung oberhalb dieser Bewertungsschwelle TH_{1,} wird das Merkmal in einem weiteren Schritt 435 mit einem ersten Wert (vorliegend mit B₁ ="1") bewertet, andernfalls mit einem davon verschiedenen zweiten Wert (z.B. B₁ = "0"). Es ist hier also insbesondere eine binäre Wertvergabe möglich. Alle weiteren Merkmale werden auf entsprechende Weise, insbesondere unter Verwendung merkmalsspezifischer individueller Bewertungsschwellen THᵢ, bewertet, um jeweilige Bewertungen B₂ bis B₄ zu erhalten.

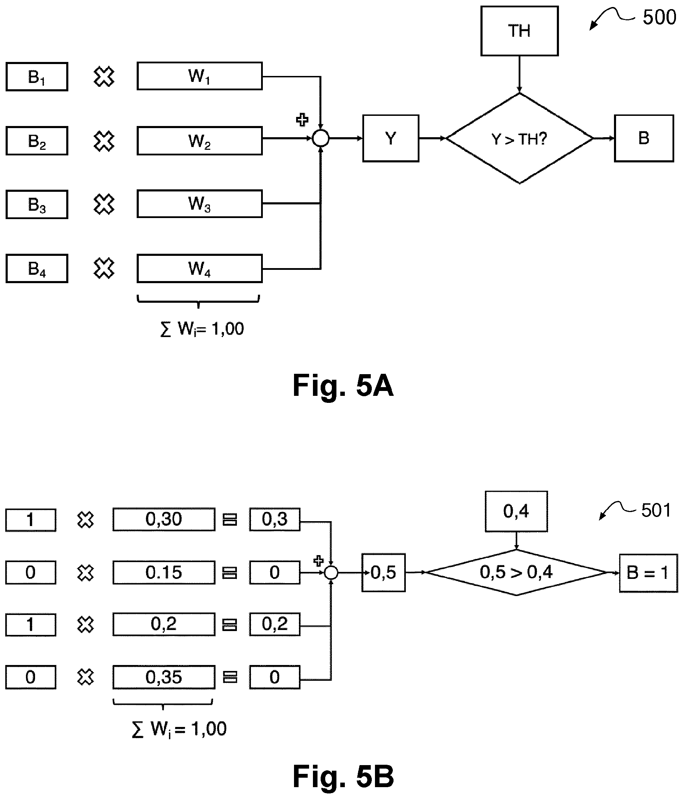

Eine zweite Stufe des Prozesses 120 ist im linken Teil eines in **Fig. 5A** dargestellten Prozesses 500 und als konkretes numerisches Beispiel 501 dazu in **Fig. 5B** illustriert. Bei dieser zweiten Stufe werden die in der ersten Stufe bestimmten Werte B₁ bis B₄ der extrahierten Merkmale jeweils mit einem individuellen Gewichtswert, insbesondere einem jeweiligen Gewichtungsfaktor W₁ bis W₄, gewichtet und kombiniert, was insbesondere durch Bildung einer Summe der gewichteten Werte (Wᵢ . Bᵢ) der Merkmale erfolgen kann. Die Gewichtungsfaktoren W₁ bis W₄ sind entsprechend dem Wertebereich der Werte B₁ bis B₄ zweckmäßigerweise so normiert, dass ihre Summe den Wert 1 ergibt. Als Ergebnis der gewichteten Summe ergibt sich ein Bewertungsindikator Y, dessen Wert vorliegend im Werteintervall [0; 1] liegt. Optimale Werte für die Gewichtswerte bzw. vorliegend Gewichtungsfaktoren, W₁ bis W₄ können insbesondere im Rahmen von Testreihen vorab ermittelt werden. Alternativ dazu kann das Ermitteln des Bewertungsindikators Y unter Verwendung eines trainierten Maschinenlern-Modells mit den Werte B₁ bis B₄ der extrahierten Merkmale als Eingangsgrößen des Maschinenlern-Modells erfolgen, wobei die Gewichtungsfaktoren W₁ bis W₄ im Rahmen des Trainings automatisch bestimmt werden. Hierzu kommt insbesondere in künstliches neuronales Netz als Maschinenlern-Modell infrage.

Auf Basis des so ermittelten Bewertungsindikators Y kann nun in einem weiteren Prozess 130 im Rahmen des Verfahrens 100 eine Bewertung des Fügeprozesses erfolgen, indem der Bewertungsindikator Y mit einer vorbestimmten Bewertungsreferenz, insbesondere einer Bewertungsschwelle TH, gegenübergestellt, insbesondere unmittelbar verglichen, wird, wobei als Ergebnis der Gegenüberstellung ein entsprechendes Bewertungsergebnis B erzeugt wird, welches als Qualitätsbewertung für den Fügeprozess genutzt werden kann.

Schließlich kann sodann die Pressvorrichtung 605 oder allgemeiner das System 600 und somit der weitere Prozessverlauf zur Behandlung des im aktuellen Takt in der Pressvorrichtung erzeugten Verbundprodukts P in Abhängigkeit vom Bewertungsergebnis B im Rahmen eines Prozesses 135 gesteuert werden. Eine solche Steuerung 135 kann insbesondere auch eine (Neu-)Kalibrierung der Pressvorrichtung umfassen. Ein andere, auch kumulativ dazu nutzbare, Möglichkeit besteht darin, eine Separierung von Gutteilen und Defektteilen in Abhängigkeit von den Bewertungsergebnissen B je Takt vorzunehmen.

Dies ist ebenfalls in **Fig. 6** illustriert, wo im System 600 des Weiteren eine der Pressvorrichtung 605 im Prozessfluss nachgelagerte Ausschleusungseinrichtung 630 vorgesehen ist, die von der Datenverarbeitungsvorrichtung 620 in Abhängigkeit vom Bewertungsergebnis B des aktuellen Takts derart ansteuerbar ist, dass bei einem Bewertungsergebnis B, das einen fehlerbehafteten Fügeprozess kennzeichnet, das erzeugte Verbundprodukt P als Defektteil behandelt und von der Ausschleusungseinrichtung 630 aus dem Prozess ausgeschleust und beispielsweise in ein Sammeldepot 635 für Defektteile überführt wird. Andernfalls, wenn das Bewertungsergebnis B einen fehlerfreien Fügeprozess kennzeichnet, wird das erzeugte Verbundprodukt P dagegen als Gutteil behandelt und dem weiteren Prozessfluss 640 für Gutteile zugeführt.

Im Falle der schon erwähnten wiederholten, insbesondere getakteten, Ausführung des Verfahrens 100, können die Bewertungsergebnisse je Ausführung insbesondere in einer Datenstruktur oder Datenbank derart abgespeichert werden, dass darin die Bewertungsergebnisse B den jeweiligen Ausführungen des Fügeprozesses zugeordnet sind, sodass aus den in der Datenstruktur bzw. Datenbank gespeicherten Inhalten auf die jeweiligen individuellen Bewertungsergebnisse jedes der Fügeprozesse rückgeschlossen werden kann. Als Datenstruktur kommt insbesondere ein Schieberegister infrage. Die Datenstruktur oder Datenbank kann insbesondere im Speicher 625 des Systems 600 gespeichert und für die Ausschleusungseinrichtung 630 und/oder für entlang des weiteren Prozessverlaufs 640 eingesetzte weitere Arbeitsstationen im System 600 zugreifbar konfiguriert sein. Auf diese Weise können die Bewertungsergebnisse mit den erzeugten Verbundprodukten P durch den Prozess "mitwandern", also durchgängig verfügbar bleiben. Insbesondere kann die Kommunikation der Bewertungsergebnisse B innerhalb des Systems 600 gemäß dem OPC-UA Informationsmodell (z.B. gemäß dessen Version V. 2.0) erfolgen.

### BEZUGSZEICHENLISTE

- 100: Verfahren zum Überwachen eines Fügeprozesses
- 105 - 135: Verfahrensschritte des Verfahrens 100
- 200: zeitlicher Verlauf der Messgröße "Presskraft"
- 205: zeitlicher Verlauf der Arbeitsstellung der Pressvorrichtung
- 210: Verläufe der Messgröße "Presskraft" in Abhängigkeit von der Arbeitsstellung
- 215: Vorverarbeitung, insbesondere (Tiefpass-)filterung
- 220: Transformation der Verläufe 200 (nach Vorverarbeitung) und 205 zur Bestimmung des Verlaufs 210
- 300: Schema zur Merkmalsextraktion
- 305: Extraktion eines ersten Merkmals "Maximalkraft"
- 310: Extraktion eines zweiten Merkmals "Schwellenüberschreitung im Anstieg"
- 315: Extraktion eines dritten Merkmals "Schwellenüberschreitung im Abfall"
- 320: Extraktion eines vierten Merkmals "Flächenintegral"
- 400: Prozess zur individuellen Bewertung von Merkmalen, am Beispiel des ersten Merkmals
- 401: numerisches Beispiel zum Prozess 400
- 405: Messwerte zum (ersten) Merkmal für zurückliegende Arbeitstakte
- 410: Mittelwertbildung über die Messwerte 405
- 415: Differenzbildung
- 420: Vergleich mit merkmalsbezogener Schwelle
- 425: individuelle Bewertung des (ersten) Merkmals
- 500: Prozess zur Bestimmung eines Bewertungsindikators für den Fügeprozess
- 501: numerisches Beispiel zum Prozess 500
- 600: Systems zum Ausführen und automatischen Überwachen eines Fügeprozesses
- 605: Pressvorrichtung, insbesondere Siegelmaschine für Blisterverpackungen
- 605a, b: Presswerkzeuge
- 610: Steuerungseinheit der Pressvorrichtung, insbesondere SPS
- 615: Sensorik zur Erfassung von Messwerten für Messgröße(n)
- 620: Datenverarbeitungssystem
- 625: Speicher, insbesondere Programmspeicher und/oder Datenspeicher
- 630: Ausschleusungseinrichtung
- 635: Sammeldepot für ausgeschleuste Defektteile
- 640: weiterer Prozessfluss für Gutteile
- B: Bewertungsindikator für Fügeprozess
- Bᵢ: Wert des i-ten Merkmals
- C: Steuerungssignale
- D: Daten
- E1, E2: Maximalkraftwerte
- F_{max,j}: Messwerte für erstes Merkmal "Maximalkraft" mit j = n-4,..., n-1
- ØFₘₐₓ: Mittelwert der Messwerte F_{max,j}
- F_{max,n}: aktueller Messwerte für erstes Merkmal "Maximalkraft"
- F1: Anstiegskraftschwelle
- F2: Abfallkraftschwelle
- NSP: Nachspannung bzw. Nachspannungskraft
- P: Verbindungsprodukt
- PSP: Pressspannung
- TH: Bewertungsschwelle als Bewertungsreferenz für Bewertungsindikator
- THᵢ: individuelle Bewertungsschwelle zum i-ten Merkmal
- VSP: Vorspannung bzw. Vorspannungskraft
- Wᵢ: Gewicht des i-ten Merkmals
- X: Abweichung vom Mittelwert
- Y: gewichtete Summe der Werte der Merkmale

## Patentansprüche

1. Verfahren (100) zur automatischen Überwachung eines Fügeprozesses zum Verbinden einer Mehrzahl von überlappend angeordneten Substraten untereinander zu einem Verbundprodukt unter Druckbeaufschlagung durch eine Pressvorrichtung (605), wobei das Verfahren (100) aufweist:
Erfassen (105) von Messdaten, die für verschiedene von der Pressvorrichtung (605) im Rahmen der Druckbeaufschlagung eingenommene Arbeitsstellungen jeweilige Messwerte einer Messgröße repräsentieren, die eine während der jeweiligen Arbeitsstellung auf die Substrate einwirkende Presskraft oder eine in einem Abhängigkeitsverhältnis damit stehende Größe angibt;
Auswerten der erfassten Messdaten, um daraus eine Mehrzahl verschiedener Merkmale zu extrahieren (115; 305,... ,-320), die jeweils einzeln und/oder gemeinsam zumindest eine charakteristische Eigenschaft eines durch die Messdaten repräsentierten Verlaufs (210) der Messgröße in Abhängigkeit von den Arbeitsstellungen der Pressvorrichtung (605) oder einer zu den Arbeitsstellungen korrespondierenden Größe repräsentieren;
Ermitteln (120) eines als ein Maß für eine Qualität des Fügeprozesses definierten Bewertungsindikators (B) in Abhängigkeit von den extrahierten Merkmalen;
Bewerten (130) des Fügeprozesses anhand einer Gegenüberstellung des ermittelten Bewertungsindikators (B) mit einer definierten Bewertungsreferenz unter Erzeugung eines aus der Gegenüberstellung resultierenden Bewertungsergebnisses; und
Steuern (135) der Pressvorrichtung (605) und/oder Weiterbehandeln, insbesondere Weiterprozessieren, Ausschleusen oder Markieren, des mittels des Fügeprozesses erzeugten Verbundprodukts in Abhängigkeit von dem Bewertungsergebnis.

2. Verfahren (100) nach Anspruch 1, wobei zumindest eines der Merkmale aus der folgenden Liste von Größen ausgewählt oder als eine mit zumindest einer Größe aus der Liste in einem Abhängigkeitsverhältnis stehende Größe definiert ist oder wird:
- ein zu einer maximalen Presskraft (Fₘₐₓ) korrespondierender Extremwert (E1; E2) des Verlaufs (210) der Messgröße;
- ein Indikator, der eine Arbeitsstellung kennzeichnet, bei der der Extremwert auftrat;
- eine Vorspannungskraft (VSP), der die Anordnung der überlappenden Substrate durch die Pressvorrichtung (605) ausgesetzt war, bevor die zum Verbinden der Substrate mit einer demgegenüber erhöhten Presskraft ausgeführte Druckbeaufschlagung einsetzte;
- eine Nachspannungskraft (NSP), der die Anordnung der dann bereits verbundenen Substrate durch die Pressvorrichtung (605) ausgesetzt wurde, nachdem die zum Verbinden der Substrate mit einem demgegenüber erhöhten Presskraft ausgeführte Druckbeaufschlagung erfolgt war;
- eine Differenz oder ein Verhältnis aus Vorspannungskraft (VSP) und Nachspannungskraft (NSP);
- ein Indikator, der eine Arbeitsstellung kennzeichnet, bei der ausgehend von der Vorspannungskraft (VSP) die mit einer demgegenüber erhöhten Presskraft ausgeführte Druckbeaufschlagung zum Verbinden der Substrate einsetzte oder ansteigend eine erste vorbestimmte Kraftschwelle (F1) überschritt;
- ein Indikator, der eine Arbeitsstellung kennzeichnet, bei der nach der mit einer demgegenüber erhöhten Presskraft ausgeführten Druckbeaufschlagung zum Verbinden der Substrate die Nachspannungskraft (NSP) einsetzte oder die vorausgehende Druckbeaufschlagung abfallend eine zweite vorbestimmte Kraftschwelle (F2) überschritt;
- eine über ihren Verlauf (210) hinweg bestimmtes Integral der Messgröße.

3. Verfahren (100) nach einem der vorausgehenden Ansprüche, wobei als Messdaten Sensordaten erfasst werden, die auf Basis von Messungen mit zumindest einem der folgenden Sensortypen erfasst wurden oder werden: Wägezelle, Dehnungsmessstreifen, Beschleunigungsmesser.

4. Verfahren (100) nach einem der vorausgehenden Ansprüche, wobei die Messdaten einer Vorverarbeitung (110, 215) zur Verbesserung der Datenqualität unterzogen werden, und die Extraktion zumindest eines der Merkmale aus den im Rahmen der Vorverarbeitung (110; 215) aufbereiteten Messdaten erfolgt.

5. Verfahren (100) nach Anspruch 4, wobei die Vorverarbeitung (110; 215) ein Filtern (215) der Messdaten zur Reduktion oder Beseitigung hochfrequenter Störeinflüsse umfasst.

6. Verfahren (100) nach Anspruch 4 oder 5, wobei die Vorverarbeitung (110; 215) ein Transformieren der Messdaten derart umfasst, dass die transformierten Messdaten die Messgröße weiterhin als eine in Abhängigkeit von den Arbeitsstellungen der Pressvorrichtung (605) oder der zu den Arbeitsstellungen korrespondierenden Größe repräsentieren, sie jedoch von der Geschwindigkeit der von der Pressvorrichtung (605) ausgeübten Druckbeaufschlagung unabhängig sind.

7. Verfahren (100) nach einem der vorausgehenden Ansprüche, wobei das Ermitteln des Bewertungsindikators (B) in Abhängigkeit von den extrahierten Merkmalen eine Gewichtung der Merkmale mit jeweiligen zugeordneten Gewichtswerten (Wᵢ) erfolgt.

8. Verfahren (100) nach Anspruch 7, wobei die Merkmale jeweils anhand von zumindest eines jeweiligen Werts aus einerje Merkmal individuellen oder für alle Merkmale gleichen vordefinierten begrenzten Wertemenge quantifiziert werden, und diese Werte mit den jeweils zugeordneten Gewichtswerten (Wᵢ) in die Ermittlung des Bewertungsindikators (B) einfließen.

9. Verfahren (100) nach Anspruch 7 oder 8, wobei zumindest einer der Gewichtswerte (Wᵢ) auf Basis von den jeweiligen Bewertungsergebnissen eines oder mehrerer vorausgehender Ausführungen des Fügeprozesses abgeleitet wird, wobei diese Bewertungsergebnisse jeweils einen fehlerhaften Fügeprozess anzeigen.

10. Verfahren (100) nach einem der vorausgehenden Ansprüche, wobei das Ermitteln des Bewertungsindikators (B) unter Verwendung eines trainierten Maschinenlern-Modells mit den extrahierten Merkmalen als Eingangsgrößen des Maschinenlern-Modells erfolgt

11. Verfahren (100) nach einem der vorausgehenden Ansprüche, wobei die Gegenüberstellung des ermittelten Bewertungsindikators (B) mit einer definierten Bewertungsreferenz ein Vergleich des ermittelten Bewertungsindikators (B) mit zumindest einer als Bewertungsreferenz dienenden, vorbestimmten Bewertungsschwelle umfasst.

12. Verfahren (100) nach einem der vorausgehenden Ansprüche, wobei:
das Verfahren (100) ein Überwachen einer mehrfachen Ausführung des Fügeprozesses zur Erzeugung einer entsprechenden Anzahl von Verbundprodukten umfasst; und
die Bewertung je überwachtem Fügeprozess erfolgt, wobei je Fügeprozess das jeweilige Bewertungsergebnis in einer Datenstruktur oder Datenbank derart abgespeichert wird, dass darin die Bewertungsergebnisse den jeweiligen Fügeprozessen zugeordnet sind, sodass aus den in der Datenstruktur bzw. Datenbank gespeicherten Inhalten auf die jeweiligen individuellen Bewertungsergebnisse jedes der Fügeprozesse rückgeschlossen werden kann.

13. Verfahren (100) nach einem der vorausgehenden Ansprüche, wobei das Steuern der Pressvorrichtung (605) je Fügeprozess in Abhängigkeit von dem jeweiligen zugeordneten und in der Datenstruktur bzw. Datenbank gespeicherten Bewertungsergebnis erfolgt.

14. Verfahren (100) nach einem der vorausgehenden Ansprüche, wobei die Bewertungsergebnisse unter Verwendung einer Kommunikation auf Basis des OPC-UA Informationsmodells an eine Steuerung (610) der Pressvorrichtung (605) übermittelt werden, um ihr das Steuern der Pressvorrichtung (605) in Abhängigkeit von dem Bewertungsergebnis zu ermöglichen und/oder sie dazu zu veranlassen.

15. Verfahren (100) nach einem der vorausgehenden Ansprüche, wobei als Pressvorrichtung (605) eine Siegelmaschine verwendet wird, um zwei oder mehr der Substrate zu einer Blisterverpackung zu verbinden.

16. Datenverarbeitungssystem (620) zur automatischen Überwachung eines Fügeprozesses, wobei das Datenverarbeitungssystem (620) zumindest eine Prozessorplattform und einen damit gekoppelten Speicher aufweist, in dem Anweisungen gespeichert sind, die bei ihrer Ausführung auf der Prozessorplattform diese veranlassen, das Verfahren (100) nach einem der vorausgehenden Ansprüche auszuführen.

17. System (600) zum Ausführen und automatischen Überwachen eines Fügeprozesses zum Verbinden einer Mehrzahl von überlappend angeordneten Substraten untereinander zu einem Verbundprodukt unter Druckbeaufschlagung durch eine Pressvorrichtung (605), wobei das System (600) die Pressvorrichtung (605) einschließlich einer Steuerung (610) dafür sowie das Datenverarbeitungssystem (620) gemäß Anspruch 16 aufweist, welches eingerichtet ist, von ihm verfahrensgemäß bestimmte Bewertungsergebnisse für den Fügeprozess an die Steuerung (610) zu kommunizieren.

18. Computerprogramm oder Computerprogrammprodukt, insbesondere nicht-flüchtiges computerlesbares Speichermedium, jeweils mit Anweisungen, die bei ihrer Ausführung auf einem Datenverarbeitungssystem (620) nach Anspruch 16, bewirken, dass dieses das Verfahren (100) nach einem der Ansprüche 1 bis 15 ausführt.
